# EUROPEAN PATENT APPLICATION

(11) **EP 2 026 499 A1**
(43) Date of publication of application: **18.02.2009**
(21) Application number: 08004653.5
(22) Date of filing: 13.03.2008
(51) Int. Cl.: H04L 12/18

(54) **A method of generating and displaying a message and an apparatus for performing such a method**

(30) Priority: 13.08.2007 GB 0715703
(71) Applicant: Mavcast Limited, 261 Low Lane Leeds, LS 18 5NY (GB)
(72) Inventor: Moystyn-Jones, Richard, Leeds, LS6 4QU (GB); Dobson, Stephen, Embsay Skipton, BD23 6PN (GB)
(74) Representative: McDonough, Jonathan

(57) **Abstract**

A method of generating and displaying a message comprising the steps of
providing at least one display device adapted to display a transmission message;
providing a communications network adapted to receive a transmission message and transfer it to the display device;
providing a first computer connected to the communications network;
providing a second computer remote from the first computer and connected thereto;
providing instructions from the second computer to the first computer which result in the provision of a user message on the first computer;
converting the user message to a transmission message; and,
providing the transmission message to the communications network.

## Description

The present invention relates to a method of generating and displaying a message. It also relates to an apparatus for performing such a method. More particularly, but not exclusively, the present invention relates to a method of generating and displaying a message wherein a user message is generated on a first computer under the action of a second computer, the user message then converted into a transmission message which is transmitted over a network and displayed. More particularly, but not exclusively, the present invention relates to a method whereby a transmission message is transmitted across a communications network to a variety of difference display devices, the display devices comprising a shared instruction set. The step of converting the user message into a transmission message comprises the step of converting the user message into a message in the shared instruction set.

It is known within the mobile telephone industry to transmit messages between individual mobile (cellular) telephones. Such messages may comprise any combination of text, pictures, video, audio or other audio visual components. Furthermore, it is known to distribute such messages to a plurality of mobile telephones at the same time (such messages being transmitted as a batch in one operation, though they may of course not all be received at the same time). Advantageously, the generation of a single message for transmission to a large number of recipients can be used in order to reach a large number of mobile telephone users in one operation, which can be used for marketing purposes, distributing public information or similar applications.

However, transmitting a single message to a large number of recipients has previously been dependent upon the person or company generating and transmitting the message using dedicated message generation and transmission computer servers which are directly connected to the mobile telephone network. The requirement to have access to such dedicated hardware has presented a barrier to companies who have not previously wanted to undertake widespread messaging, or who only want to transmit such messages relatively infrequently. Message generation and transmission servers are expensive, physically bulky, complex to use and relatively uncommon, meaning that the ability to transmit messages, for instance marketing messages, has previously been limited to a small number of large companies for whom the associated expense and complexity are not a significant hurdle.

It is recognised that there are a large number of smaller companies or other organisations or even individuals who would benefit from the ability to generate and transmit messages to their customers, suppliers, staff or other groups of people. However, such companies, organisations and individuals have hitherto not been able to do so due to the above described costs and complexities of traditional methods of generating and transmitting messages to large numbers of recipients.

Accordingly, in a first aspect, the present invention provides a method of generating and displaying a message comprising the steps of
providing at least one display device adapted to display a transmission message;
providing a communications network adapted to receive a transmission message and transfer it to the display device;
providing a first computer connected to the communications network;
providing a second computer remote from the first computer and connected thereto;
providing instructions from the second computer to the first computer which result in the provision of a user message on the first computer;
converting the user message to a transmission message; and,
providing the transmission message to the communications network.

By separating the user message generation from the more complex generation of the transmission message enables the user message generation to be performed by members of the public without specialist knowledge in this field.

Preferably, the user message is generated on the second computer and transmitted to the first computer. The user message can be generated at a remote computer and then transmitted to the first computer for conversion and transmission.

Alternatively, the second computer can instruct generation of the user message on the first computer by the first computer. The second computer could be connected to the first by a web based interface which enables a remote user on the second computer to assemble the user message on the first computer and remotely instruct conversion and transmission.

The step of generating the user message can include the step of inserting at least one media file into the user message, preferably at least one of an image file, a video file or audio file.

The step of generating the user message can include the step of entering a text message component on the second computer and inserting it into the user message.

The text message component can be converted to an image file before insertion into the user message.

The transmission message can comprise instructions selected from an instruction set and data.

Preferably, the method comprises the step of providing a plurality of display devices in communication with the communication network, the display devices being adapted to receive a common instruction set, the step of converting the user message to the transmission message producing a transmission message which includes only instructions from the common instruction set.

At least one display device can be adapted to recognise at least one additional instruction in addition to the common instruction set.

The plurality of display devices can comprise a mixture of different devices.

The first computer can be connected to a plurality of communications networks.

The at least one display device can be a mobile phone.

The at least one display device can be a digital television.

The display device can be a computer.

In a further aspect of the invention there is provided an apparatus for generating and displaying a message comprising
at least one display device adapted to display a transmission message;
a communications network adapted to receive a transmission message and transfer it to the display device;
a first computer connected to the communications network;
a second computer remote from the first computer and connected thereto, the second computer being adapted to provide instructions to the first computer resulting in the provision of a user message on the first computer;
the first computer being adapted to convert the user message to the transmission message.

Preferably, the apparatus comprises a plurality of display devices, the display devices being adapted to recognise a common instruction set, the first computer being adapted such that the transmission message includes only instructions from the common instruction set.

Preferably, at least one of the display devices is adapted to recognise at least one further instruction to the common instruction set.

The present invention will now be described by way of example only and not in any limitative sense with reference to the accompanying drawings in which
Figure 1 schematically illustrates a network diagram in accordance with embodiments of the present invention;
Figure 2 is a screen shot of a user login screen in accordance with an embodiment of the present invention;
Figure 3 is a screen shot of a message generation interface in accordance with an embodiment of the present invention;
Figure 4 is a partial screen shot of the message generation interface of figure 3 in accordance with an embodiment of the present invention;
Figure 5 is a partial screen shot of the message generation interface of figure 3 in accordance with an embodiment of the present invention;
Figure 6 is a screen shot of a message distribution interface in accordance with an 5 embodiment of the present invention;
Figure 7 is a screen shot of the message distribution interface of figure 6 during transfer of message destination information in accordance with an embodiment of the present invention; and
Figure 8 is a screen shot of an authentication screen prior to message transmission in 10 accordance with an embodiment of the present invention.

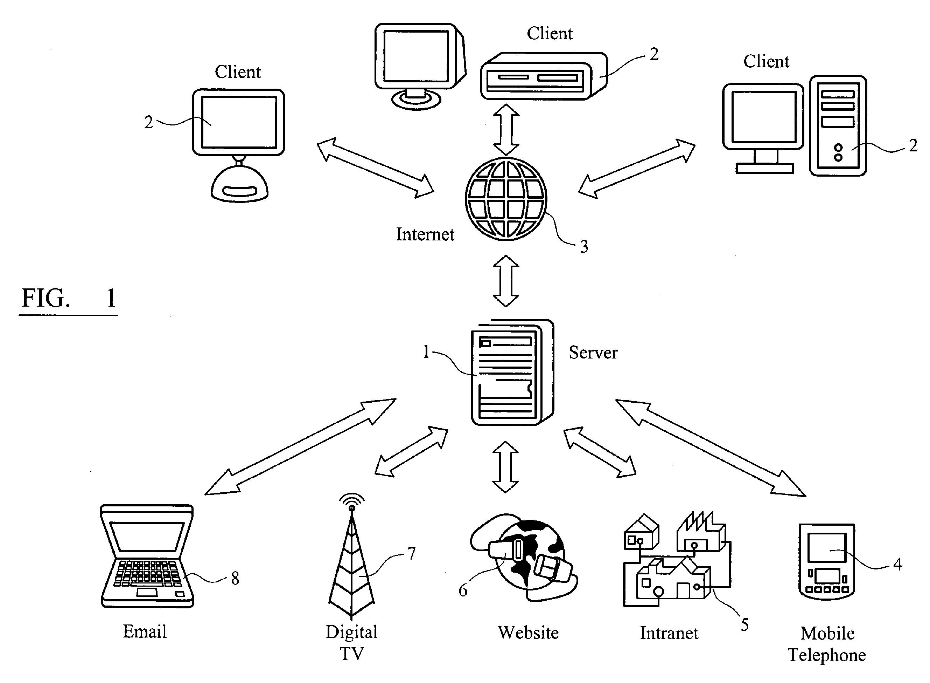

Figure 1 illustrates a first computer 1, which comprises a message generation and transmission server. It will be appreciated that in alternative embodiments of the present invention, there may in fact be a large number of separate servers 1, in order to the service the messaging requirements of a larger number of users. Figure 1 further illustrates a plurality of second computers 2. Each client computer 2, which may be a conventional computer, allows a separate user to access the server 1 via network 3, which may be the internet as illustrated, but may alternatively 5 be any suitable type of public or private network, for instance an intranet, or a mobile telecommunications network.

A user located at a client computer 2 remotely accesses the server 1 via network 3 in order to access message generation and transmission facilities, as will be described in greater detail below. In one embodiment the user generates a user message on the client computer 2 from media files stored on client computer 2. The user message may comprise text, images, video, audio or combinations thereof. The user message is then transmitted to the server 1. In an alternative embodiment of the invention a browser on the client computer 2 sends instructions to the server 1 which results in t user message being generated on the server 1, typically from media files stored on the server1. Additionally, a user can transfer transmission details for each customer or other recipient of the message from the client 2 to the server 1, for instance lists of mobile telephone numbers.

The server is connected to a plurality of communications networks 4-8, each having associated display devices, telephone, digital TV etc. The user message is converted into a plurality of transmission messages, one for each network. The transmission messages are then transmitted over the associated networks to the display devices where they are displayed. For instance, if the message is to be delivered to mobile telephones, then the server 1 transfers the message to a mobile telephone network 4. Alternatively, a message may be intended for internal transmission within a company, in which case the message may alternatively be transmitted to a private intranet 5. The message may be intended for insertion within a website, involving transmission to the host of the website 6 (for instance by transfer over the internet). The message may be intended to be transmitted via email, in which case the message will be passed to an email system or email server 8. The message may be intended for transmission via a digital TV network, for display to a TV viewer, for instance during an advertisement break in TV programming, in which case the message is transmitted to a digital TV server 7.

It will be readily appreciated that once a message has been generated by the message server 1, then it can be transmitted via a wide range of telecommunications networks to a wide range of recipient devices, not limited to the specific examples described herein. Furthermore, it will be appreciated that a single message may be transmitted via two or more the networks at the same time. An advantage of the present invention is that from the perspective of a user of the system generating a message at server 1 via a remote connection from a client 2, the message generation process is identical regardless of the ultimate transmission method used. The user is not required to have knowledge of the operation of any particular communication network.

Typically, the transmission message sent over a network comprises data being the message to display and an instruction set instructing the display device as to how to the message is to be displayed. In a preferred embodiment of the invention the display devices, whilst being different display devices, have a common instruction set that each of the display devices recognizes. Some or all of the display devices may recognize further instructions specific to that type of device. In this preferred embodiment, the server 1 converts the user message into a transmission message employing instructions only from the common instruction set. The same message may then be sent to all the different display devices, possibly across a wide variety of computing and/or audio visual platforms. This considerably simplifies message transmission.

The connection at a client 2 to server 1 may comprise browsing to a particular website and entering appropriate credentials in order to authenticate the user to the messaging server 1. In accordance with embodiments of the present invention it is not necessary to install bespoke software upon the client computer in order to access the server and generate or transmit messages. Advantageously, this allows a user to access the system from anywhere within the world that cane establish an internet connection to the appropriate website.

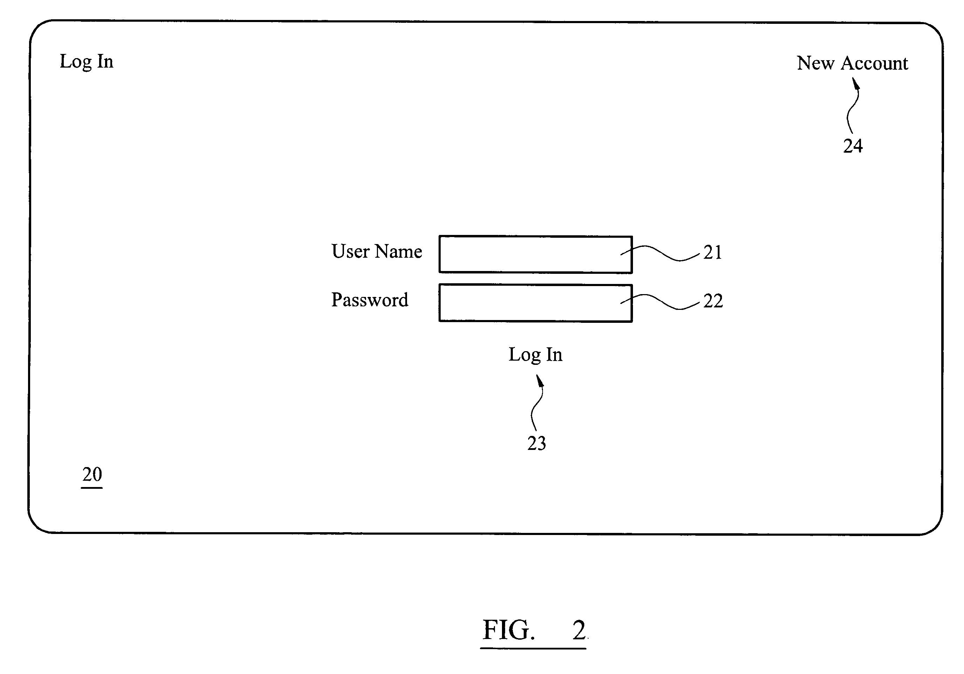

With reference to figure 2, in accordance with one embodiment of the present invention in order to access the messaging server 1 a user operating a client computer 2 accesses an appropriate page on the internet before logging in to the messaging system (referred to within the drawings as "Mavcast"). Figure 2 is a screen shot of a log in window 20, in which known users are requested to enter their user name 21 and password 22, before selecting the log in button 23. In accordance with certain embodiments of the present invention a new user may register a log in account directly with the messaging system operator or by completing an on line application process by selecting button 24 labelled create an account.

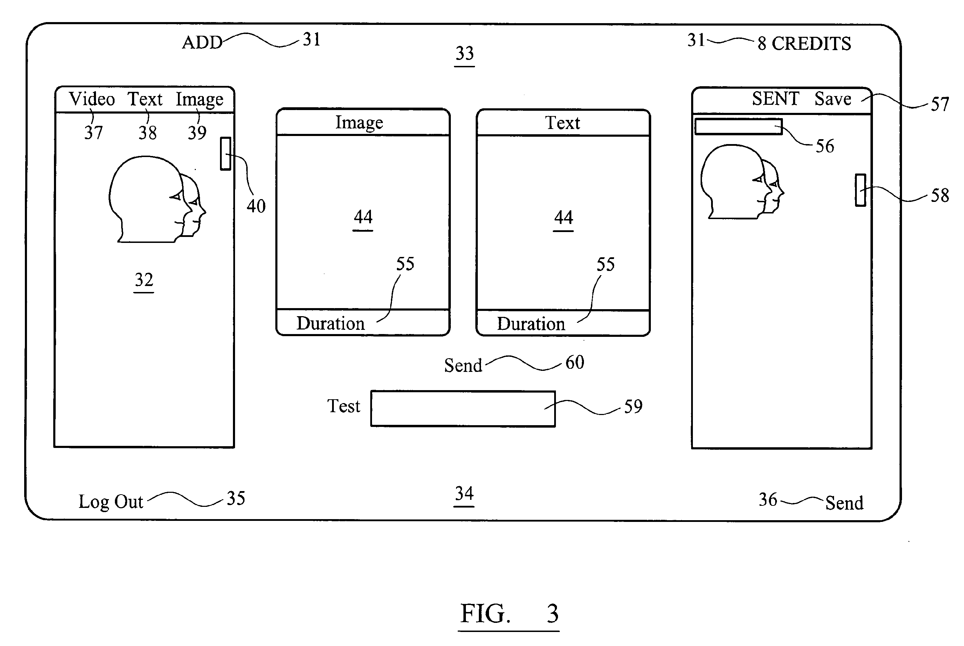

If the user name and password are recognised then the user is presented with a screen for generating a new message (referred to in the drawings as a "campaign" or advertising campaign) or selecting a previously generated message, as illustrated in the screen shot of figure 3. The screen shot of figure 3 displays information regarding how many copies of a message can be transmitted in top bar 30 (referred to as "credits" in the drawings). The remaining number of credits is insufficient, then additional credits may be purchased by the user, for instance by the purchase credits button 31, labelled as "£". The screen shot of figure 3 comprises three main areas. In a first area 32 a user can select images or video clips stored at the server 1 to be inserted in a new message. A second area 33 comprises a template for generating a new message. A third area 34 allows a user to select a previously generated message, either for further editing or for transmission. The user is also presented with options for logging off from server 1 by selecting button 35, or for transmitting a currently selected message by selecting button 36.

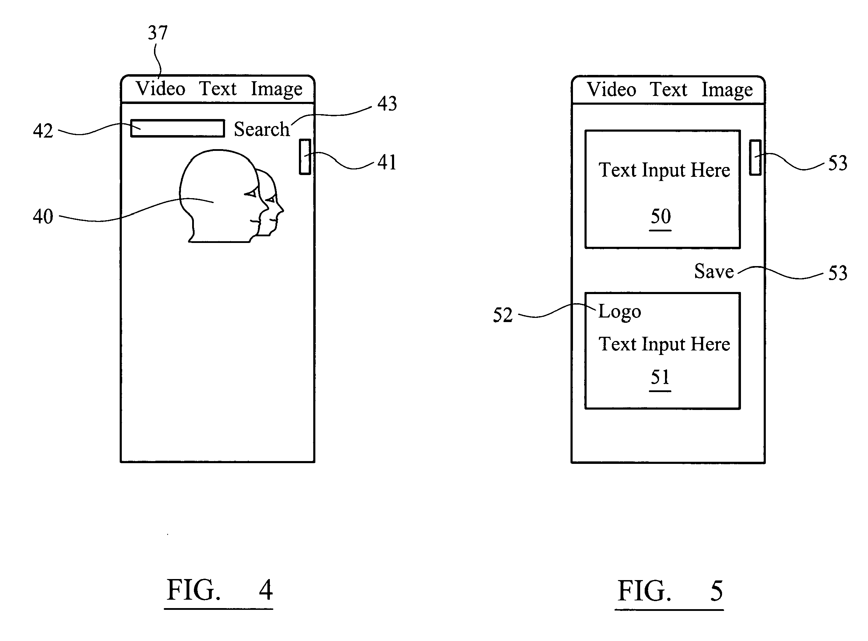

The first area 32 of the screen shot of figure 3 comprises three tabs 37-39 allowing a user to select stored images, enter text to be displayed within a message or select a stored video clip respectively. Figure 4 illustrates a partial screen shot, showing in greater detail tab 37 for selecting stored images. Tab 37 comprises a series of images 40 comprising thumb nail versions of stored images, with a scroll bar 41 to allow a user to scroll through a large number of stored images 40. The user may alternatively search through the stored images 40 by name by typing a full or partial image name into text box 42 and selecting search button 43. The user can transfer images that are stored locally to the client computer 2 to the server 1 for use in the current message or future messages. Each image is stored in a 15 standard format such as JPEG or GIF and is sorted by a unique reference within an SQL database.

With reference back to figure 3, if a user chooses to insert a selected image 40 into a message, then the user can select the image by clicking on the image and dragging the image into a slide template 44 within the second area of the screen 33 using a user input device such as a mouse. Each multimedia message can contain one or a combination of elements including text, still image, video images and audio. The generated message is built up through one or more slides 44, each of which are displayed in order to the message recipient. The user is able to select or manipulate these message elements according to the requirements of the message.

Figure 5 is a partial screen shot illustrating text entry tab 38. The user can type up to 6 lines of text into text box 50. Preview box 51 illustrates the text as it will appear within the message. As noted above, in certain embodiments of the present invention text is transmitted and displayed as an image rather than as editable text. Within preview box 51, the text may be formatted with a logo 52 as a "letter head" for the text slide. After the user has entered the text, the text is formatted using standard action scripting and PHP formatting to create the letter head presented text. Once the user is happy with the entered text, the text as displayed in preview box 51 can be saved by selecting button 53, after which it is available for use within the current or future messages by dragging the formatted text. The text is saved within the message server 1 using a reference code within an SQL database. Scroll bar 54 allows the user to search through a large number of saved texts for insertion into messages.

Video selection tab 39 is arranged in a similar fashion to image tab 37, allowing the user to search through and select previously stored video clips. Videos can be transferred by the user from a client computer 2 to the server 1 in a range of standard video formats, such as MPEG-4 and WMV. However, for transmission to a mobile phone videos are reformatted by the server 1 as 3GP files. For transmission to mobile phones it is necessary to keep the length of video clips to a relatively small size, such as 6 to 7 seconds, partly because if the message size is too great then the message may not be accepted by a mobile telephone network. Saved video clips are stored within an SQL database at the server 1.

Audio files may also be stored at the server 1, by transferring audio files generated elsewhere in a standard format such as AMR or MP3. Audio files transferred to the server 1 are stored in the SQL database.

Referring back to figure 3, each message is generated within screen portion 33 as a series of slides 44 within a slide show. The duration for which each slide is displayed to a recipient of the message can be adjusted by selecting the duration in seconds from drop down menu 55. As stored text, image, video or audio elements are selected for inclusion within the message and assembled in the chosen sequence, the reference to each element within the SQL database is recorded and saved using action scripting and PHP formatting to generate a standard SMIL file suitable for transmission to and display upon a mobile telephone, or other formats of computing or audiovisual devices. The media files referenced within the SQL database and the constructed SMIL file are then stored within a separate delivery folder for transmission using the selected transmission method. Once the currently displayed message is complete, it can be saved for future transmission or editing by entering a name into text box 56 and selecting save button 57. After a message has been saved, any future amendments to the slides will be automatically saved. Previously generated messages are displayed in the third screen portion 34 and can be searched through by using scroll bar 58.

Before a message is transmitted to a large number of recipients, the user can enter the number of a single phone into text box 59 and select button 60, wherein upon the server 1 transmits the message to the mobile phone network 4 and ultimately to a single mobile phone, in order to ensure that the message is displayed correctly.

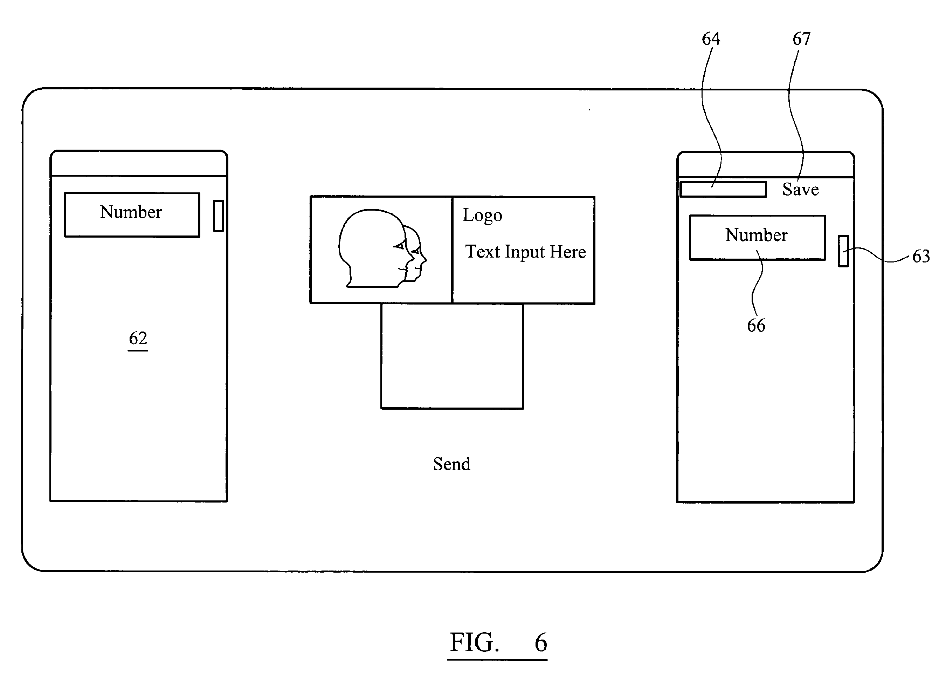

Referring now to figure 6, this is a screen shot presented to the user when they have selected button 36 illustrated in figure 3 to transmitting a generated message. The selected message is displayed in screen portion 61. The user can select previously generated sets of mobile phone numbers by clicking and dragging the sets of numbers into screen portion 61 with a user input device. The sets of mobile phone numbers are displayed in groups, and may either comprise numbers 62 captured by the system when a recipient has responded to a previous message or numbers 63 uploaded to the messaging server 1 by the user. Mobile telephone numbers can be captured by the messaging server 1 in response to a previous message which asks recipients to send a message in response to a predetermined number, formatted appropriately with for example post code details, in order to allow tailored recipient lists to be generated for future use.

Furthermore, the user is able to manually input recipient details or transfer groups of recipients details such as email addresses, mobile telephone numbers and digital TV receiver details.

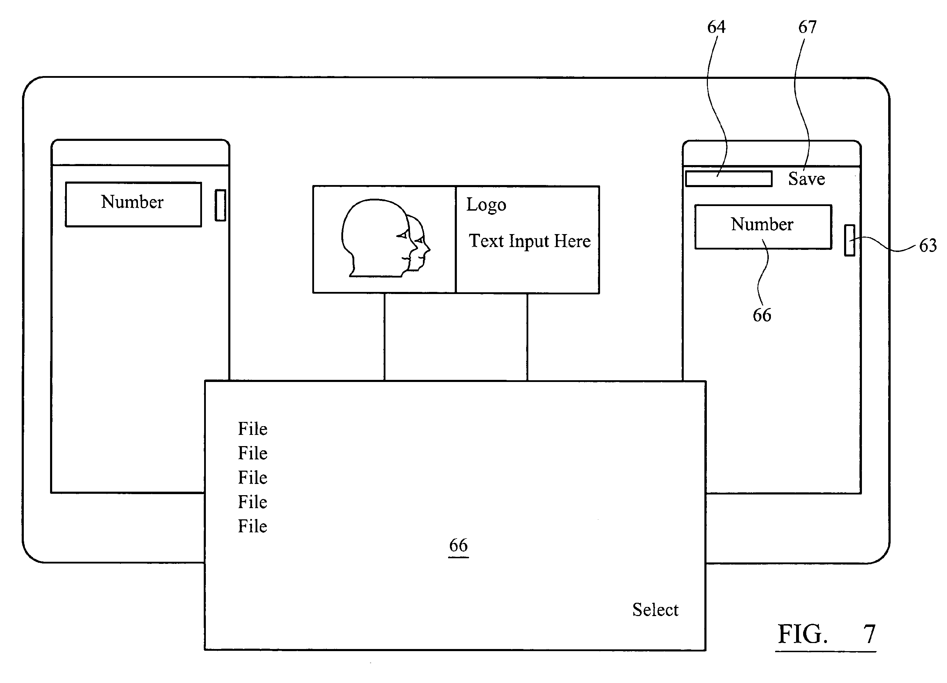

Referring to figure 7, the user has the option to upload further lists of numbers, for instance in a form of a csv file (comma separated value) by selecting button 64 which brings up a 25 browser window 65 allowing the user to search for lists of names stored locally to the client computer 2. Alternatively, the user can manually enter the name of a locally stored list of numbers in text box 66 and selecting button 67. Advantageously, lists of mobile telephone numbers can be stored according to groups which divide recipients into, for instance, geographically distinct groups, thereby allowing messages to be tailored to a particular group of recipients.

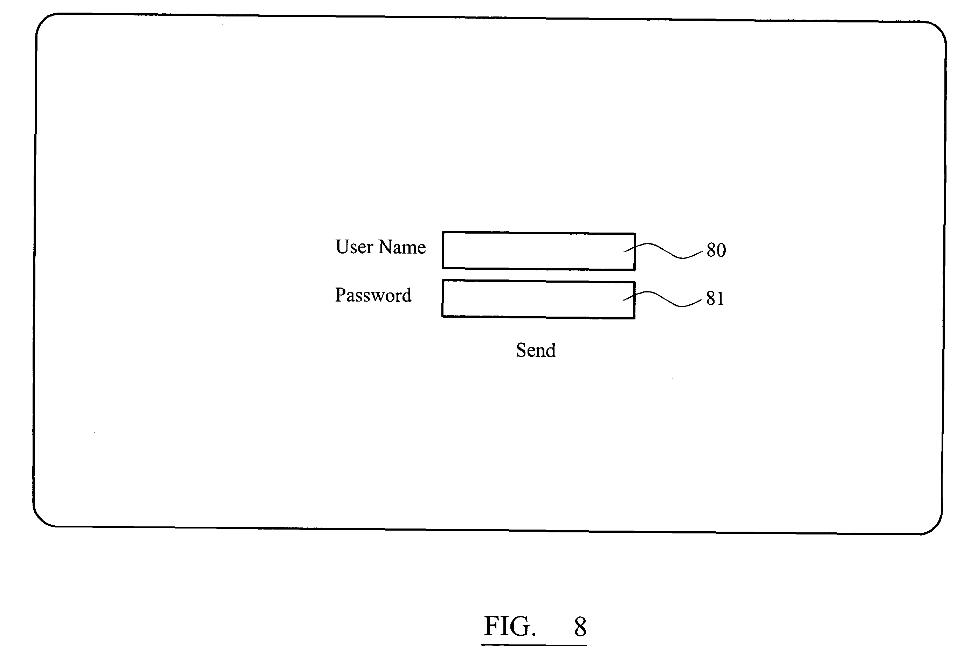

Referring to figures 8, once one or more lists of recipients have been selected, the user is once again requested to enter their user name and password into text boxes 80 and 81 as an added level of security before the message is transmitted.

Although the embodiments of the present invention described above have primarily discussed distribution of generated messages to mobile telephones, the skilled person will realise that the present invention is not limited to this. Generated messages can be transmitted using any suitable communications protocol and displayed upon any suitable to computing or audiovisual device. Further modifications and applications of the present invention will be readily apparent to the appropriately skilled person from the teaching herein without departing from the scope of the appended claims.

## Claims

1. A method of generating and displaying a message comprising the steps of
providing at least one display device adapted to display a transmission message;
providing a communications network adapted to receive a transmission message and transfer it to the display device;
providing a first computer connected to the communications network;
providing a second computer remote from the first computer and connected thereto;
providing instructions from the second computer to the first computer which result in the provision of a user message on the first computer;
converting the user message to a transmission message; and,
providing the transmission message to the communications network.

2. A method as claimed in claim 1, wherein the user message is generated on the second computer and transmitted to the first computer.

3. A method as claimed in claim 1, wherein the second computer instructs generation of the user message on the first computer by the first computer.

4. A method as claimed in either of claims 2 or 3, wherein the step of generating the user message includes the step of inserting at least one media file into the user message, preferably at least one of an image file, a video file or audio file.

5. A method as claimed in any one of claims 2 to 4, wherein the step of generating the user message includes the step of entering a text message component on the second computer and inserting it into the user message.

6. A method as claimed in claim 5, further comprising the step of converting the text message component to an image file before insertion into the user message.

7. A method as claimed in any one of claims 1 to 6, wherein the transmission message comprises instructions selected from an instruction set and data.

8. A method as claimed in claim 7, comprising the step of providing a plurality of display devices in communication with the communication network, the display devices being adapted to recognise a common instruction set, the step of converting the user message to the transmission message produces a transmission message which includes only instructions from the common instruction set.

9. A method as claimed in claim 8, wherein at least one display device is adapted to recognise at least one additional instruction in addition to the common instruction set.

10. A method as claimed in either 0f claims 8 or 9, wherein the plurality of display devices comprises a mixture of different devices.

11. A method as claimed in any one of claims 1 to 10, wherein the first computer is connected to a plurality of communications networks.

12. A method as claimed in any one of claims 1 to 11, wherein at least one display device is a mobile phone.

13. A method as claimed in any one of claims 1 to 12, wherein at least one display device is a digital television.

14. A method as claimed in any one of claims 1 to 13, wherein at least one display device is a computer.

15. An apparatus for generating and displaying a message comprising
at least one display device adapted to display a transmission message;
a communications network adapted to receive a transmission message and transfer it to the display device;
a first computer connected to the communications network;
a second computer remote from the first computer and connected thereto, the second computer being adapted to provide instructions to the first computer resulting in the provision of a user message on the first computer;
the first computer being adapted to convert the user message to the transmission message.

16. An apparatus as claimed in claim 15 comprising a plurality of display devices, the display devices being adapted to recognise a common instruction set, the first computer being adapted such that the transmission message includes only instructions from the common instruction set.

17. An apparatus as claimed in claim 16, wherein at least one of the display devices is adapted to recognise at least one further instruction to the common instruction set.
